(19)

Europäisches
Patentamt

European
Patent Office

Office européen
des brevets

(11)  EP 2 798 673 B1

(12)  EUROPEAN PATENT SPECIFICATION

(45) Date of publication and mention
of the grant of the patent:
**16.01.2019 Bulletin 2019/03**

(21) Application number: **12863100.9**

(22) Date of filing: **27.12.2012**

(51) Int Cl.:
*H01L 23/34* (2006.01)     *H01J 45/00* (2006.01)
*H01J 1/48* (2006.01)      *H01J 3/02* (2006.01)
*H01J 19/38* (2006.01)     *H01J 21/10* (2006.01)

(86) International application number:
**PCT/US2012/071837**

(87) International publication number:
**WO 2013/101941 (04.07.2013 Gazette 2013/27)**

(54) **FIELD EMISSION DEVICE**

FELDEMISSIONSVORRICHTUNG

DISPOSITIF À ÉMISSION DE CHAMP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2011 US 201161631270 P
30.12.2011 US 201113374545
26.04.2012 US 201261638986 P
10.07.2012 US 201213545504
16.08.2012 US 201213587762
12.09.2012 US 201213612129
01.11.2012 US 201213666759**

(43) Date of publication of application:
**05.11.2014 Bulletin 2014/45**

(73) Proprietor: **Elwha LLC
Bellevue, WA 98005-4046 (US)**

(72) Inventors:
• **HYDE, Roderick A.
Redmond, Washington 98052 (US)**
• **KARE, Jordin T.
Seattle, Washington 98112 (US)**
• **MYHRVOLD, Nathan P.
Bellevue, Washington 98004 (US)**
• **PAN, Tony S.
Cambridge, Massachusetts 02138 (US)**
• **WOOD, JR., Lowell L.
Bellevue, Washington 98004 (US)**

(74) Representative: **D Young & Co LLP
120 Holborn
London EC1N 2DY (GB)**

(56) References cited:
**EP-A1- 1 511 059     JP-A- 2005 116 736
US-A- 3 254 244      US-A- 5 386 172
US-A1- 2004 050 415   US-A1- 2005 001 598
US-A1- 2005 016 575   US-A1- 2009 115 305
US-B1- 6 205 790**

• **LOVICOTT, DOMINICK: 'Electron Emission
Thermal Energy Conversion', [Online] July 2010,
COLUMBIA, XP055061237 Retrieved from the
Internet:
<URL:https://mospace.umsystem.edu/xmlui/bit
stream/handle/10355/9264/research.pdf?
sequence=3> [retrieved on 2013-02-22]**

EP 2 798 673 B1

## Description

## BACKGROUND

US 2009/115305 discloses microelectronic vacuum devices including triode structures that include three-terminals (an emitter, a grid and an anode), and also higher-order devices such as tetrodes and pentodes, all of which use carbon nanotubes to form various components of the devices.

Various methods for applying, selectively removing (e.g. etching), suspending, and stiffening vertically- and horizontally-disposed nanotube fabrics are disclosed JP2005116736 discloses a thermionic conversion element with an emitter, a collector at a positive potential and a control electrode being arranged between the emitter and the collector to control the amount of emitted electrons from the emitter.

US3254244 discloses a thermionic power conversion device with an emitter, a collector and an accelerating electrode being arranged between the emitter and the collector, the accelerating electrode being maintained at a positive potential relative to that of the emitter.

## SUMMARY

The invention is defined in independent claims 1 and 10. The subject matter claimed herein is defined in the claims.

In one embodiment, an apparatus comprises: a cathode; an anode, wherein the anode and cathode are receptive to a first power source to produce an anode electric potential higher than a cathode electric potential; a gate positioned between the anode and the cathode, the gate being receptive to a second power source to produce a gate electric potential selected to induce electron emission from the cathode for a first set of electrons having energies above a first threshold energy; a suppressor positioned between the gate and the anode, the suppressor being receptive to a third power source to produce a suppressor electric potential selected to induce electron emission from the anode; at least one region including gas located between the cathode and the anode; and at least one path traversable for a first portion of the first set of electrons, extending from the cathode, through the gate, through the region including gas, through the suppressor, and to the anode.

In one embodiment, a method comprises: applying a gate electric potential to selectively release a first set of electrons from a bound state in a first region; applying a suppressor electric potential to selectively release a second set of electrons from emission from a bound state in a second region different from the first region, the second region having an anode electric potential that is greater than a cathode electric potential of the first region; and passing a portion of the first set of electrons through a gas-filled region and binding the passed portion of the first set of electrons in the second region.

The foregoing is a summary and thus may contain simplifications, generalizations, inclusions, and/or omissions of detail; consequently, those skilled in the art will appreciate that the summary is illustrative only and is NOT intended to be in any way limiting. Other aspects, features, and advantages of the devices and/or processes and/or other subject matter described herein will become apparent in the teachings set forth herein.

## BRIEF DESCRIPTION OF THE FIGURES

FIG. 1 is a schematic of an apparatus comprising a cathode, a gate, a suppressor and an anode.
FIG. 2 is a schematic of energy levels corresponding to an embodiment of the apparatus of FIG. 1.
FIG. 3 is a schematic of an apparatus comprising a cathode, a gate, a suppressor, an anode, and a screen grid.
FIG. 4 is a schematic of an apparatus comprising a cathode, a gate, a suppressor, an anode, and circuitry.
FIGS. 5-6 are flow charts depicting methods.

The use of the same symbols in different drawings typically indicates similar or identical items.

## DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the scope of the subject matter presented here.

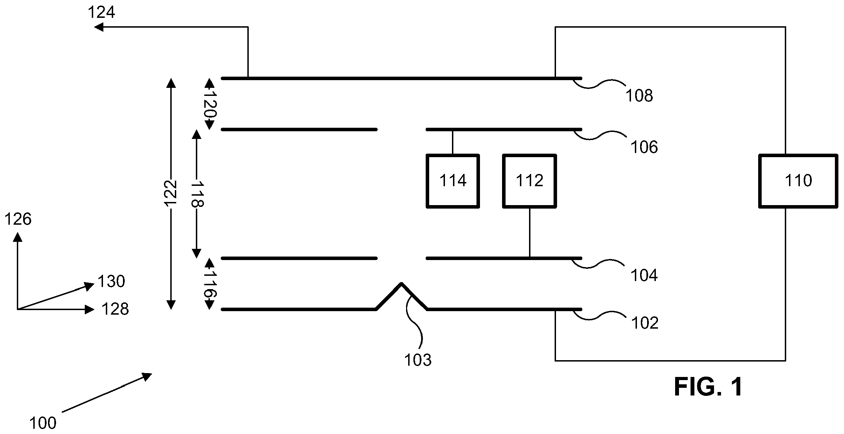

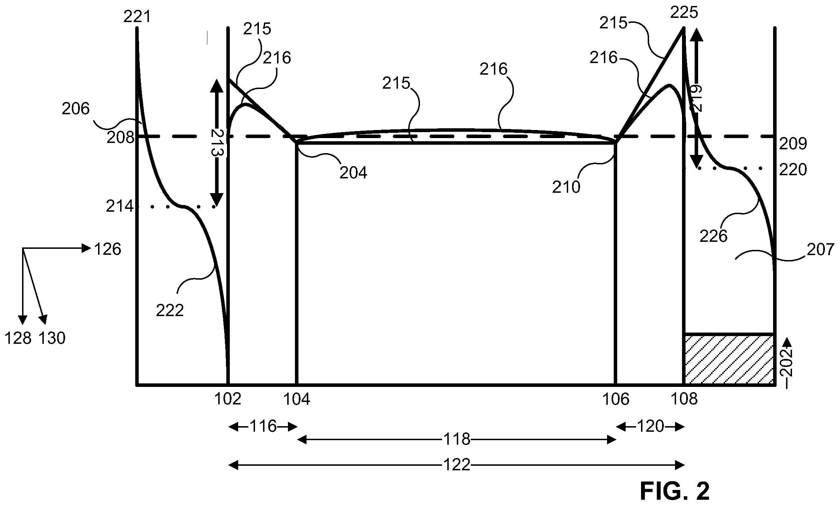

In one embodiment, shown in FIG. 1, an apparatus 100 configured as a heat engine comprises a cathode 102, an anode 108 arranged substantially parallel to the cathode 102, wherein the anode 108 and cathode 102 are receptive to a first power source 110 to produce an anode electric potential 202 higher than a cathode electric potential. It is the convention in this discussion to generally reference electric potentials relative to the value of the cathode electric potential, which in such circumstances can be treated as zero. The anode electric potential 202 and other electric potentials corresponding to the apparatus of FIG. 1 are shown in FIG. 2. The apparatus 100 further comprises a gate 104 positioned between the anode 108 and the cathode 102, the gate 104 being receptive to a second power source 112 to produce a gate electric potential 204, wherein the gate electric potential 204 is selected to induce electron emission from the cathode 102 for a first set of electrons 206 having energies above a first threshold energy 208. The apparatus 100 further comprises a suppressor 106 positioned between the gate 104 and the anode 108, the suppressor 106 being receptive to a third power source 114 to produce a suppressor electric potential 210 selected to block electron emission from the anode 108 for a second set of electrons 207 having energies below a second threshold energy 209 while passing at least a portion of the first set of electrons 206. In this embodiment the anode 108 is positioned to receive the passed portion of the first set of electrons 206.

The net current and heat flow in the embodiments described herein may be determined by the temperatures of the cathode 102 and the anode 108, the anode electric potential 202, and the gate and suppressor electric potentials 204, 210. In some embodiments described herein, such as an electricity producing heat engine that moves heat from a higher temperature to a lower temperature, net electron flow and heat flow is from the cathode 102 to the anode 108, and in other embodiments described herein, such as an electricity consuming heat engine that moves heat from a lower temperature to a higher temperature, net electron flow and heat flow is from the anode 108 to the cathode 102. Further, in the embodiments presented herein, either or both of the cathode 102 and/or the anode 108 may include field emission enhancement features 103.

FIG. 1 shows the cathode 102 having a field emission enhancement feature 103, however in some embodiments the cathode may be substantially flat and may not include the field emission enhancement feature 103. In some embodiments including one or more field emission enhancement features 103, the field emission enhancement features 103 may include a geometric tip and/or a carbon nanotube.

The apparatus 100 includes at least one region including gas through which at least a first portion of the first set of electrons 206 pass. Normally, the region between the cathode 102 and anode 108 is a gas-filled region through which at least a portion of the first set of electrons 206 passes. The gas may be comprised of at least one atomic or molecular species, partially ionized plasma, fully ionized plasma, or mixtures thereof. The gas composition and density may be chosen to be conducive to the passage of electrons. The gas density may be below atmospheric density, and may be sufficiently low as to be effectively a vacuum.

The resulting potential 215 as a function of distance from the cathode in the x-direction 126 in the apparatus 100 is shown in FIG. 2. The potential 215 does not take into account the space charge electric potential due to the emitted electrons between the cathode and anode. It also does not take into account the image charge electric potential due to image charge effects of a flat plate (i.e., the cathode and anode). The net electric potential 216 experienced by the electrons between the cathode and anode is a function of all of the electric potentials acting on the electrons, including the space charge electric potential and the image charge electric potential. Further, electric potentials such as those shown in FIG. 2 are defined herein for negatively-charged electrons, instead of the Franklin-conventional positive test charges, such that electrons gain kinetic energy when moving from high to low potential.

In the above description and the remainder of the description, it is to be understood that electrons obey the laws of quantum mechanics and therefore, given a potential barrier such as that formed between the cathode and gate (i.e., the portion of the potential 216 that is between the cathode and gate), electrons having energies between the bottom and top of the potential barrier have some probability of tunneling through the barrier. For example, some electrons having energies above the threshold energy 208 may not be emitted from the cathode 102. Further, for the first set of electrons 206 that is emitted from the cathode, there is some probability, based on their energy and the suppressor electric potential 210, that they will tunnel through the potential barrier that is formed between the suppressor and the anode (i.e., the portion of the potential 216 that is between the suppressor and the anode).

Although the first, second and third power sources 110, 112 and 114 are shown in FIG. 1 as being different, in some embodiments the power sources 110, 112 and 114 may be included in the same unit. There are many different ways that the power sources 110, 112 and 114 may be configured relative to the elements 102, 104, 106 and 108, and one skilled in the art may determine the configuration depending on the application.

Also shown in FIG. 2, on the left and right sides of the graph of the potentials 215, 216, are graphs of the Fermi-Dirac distributions $F(E, T)$ for the electrons in the cathode 102 and the anode 108.

On the left side is a graph of the Fermi-Dirac distribution corresponding to the cathode $F_c(E_c, T_c)$ (222) as a function of electron energy $E_c$ (221). Also shown is the cathode Fermi energy $\mu_c$ (214) and the cathode work function $\varphi_c$ (213).

On the right side is a graph of the Fermi-Dirac distribution corresponding to the anode $F_a(E_a, T_a)$ (226) as a function of electron energy $E_a$ (225). Also shown is the anode Fermi energy $\mu_a$ (220) and the anode work function $\varphi_a$ (219).

Electrons in a reservoir (e.g., the cathode 102 and anode 108) obey the Fermi-Dirac distribution:

$$F(E,T) = \frac{1}{1 + e^{(E-\mu)/kT}}$$

where $\mu$ is the Fermi energy, k is the Boltzmann constant, and T is the temperature. The energy where the Fermi occupation of the cathode $F_c(E_c, T_c)$ equals the Fermi occupation of the anode $F_a(E_a, T_a)$ is the Carnot-efficiency energy $E_{carnot}$:

$$E_{carnot} = \frac{\mu_a T_c - \mu_c T_a}{T_c - T_a}$$

where $\mu_c$ is the cathode Fermi energy 214 and $\mu_a$ is the anode Fermi energy 220 shown in FIG. 2, measured from the bottom of the conduction band of the cathode 102, and $T_c$ is the cathode temperature and $T_a$ is the anode temperature.

In cases where the cathode 102 and anode 108 are the same material, the Carnot-efficiency energy $E_{carnot}$ is the energy at which the Fermi occupation of the cathode 102 and the anode 108 are equal, and theoretically electron flow between the two occurs without change in entropy. Absent potential barrier 216, at any given electron energy above $E_{carnot}$ there are more electrons in the hotter plate, so the net flow of electrons at these energies go from hot plate to cold plate. Conversely, at any given electron energy below $E_{carnot}$ there are more electrons in the colder plate, so the net flow of electrons at these energies go from cold plate to hot plate.

In the embodiment of FIG. 1 corresponding to a heat engine, the cathode 102 is hotter than the anode 108 ($T_c > T_a$) and the anode 108 is biased above the cathode 102 as shown in FIG. 2. In this embodiment, $\mu_a = \mu_c + V_0$, where $V_0$ is the anode electric potential 202. Then the Carnot-efficiency energy is equal to:

$$E_{carnot} = \mu_c + \frac{V_0}{\eta_{carnot}}$$

where

$$\eta_{carnot} = \frac{T_c - T_a}{T_c}$$

is the Carnot efficiency. Due to the potential bias $V_0$, every electron going from the cathode 102 to the anode 108 gains useful potential energy $V_0$ that can be used to do work, and every electron going from the anode 108 to the cathode 102 expends potential energy $V_0$ to transport heat instead.

Without potential barriers (such as the gate 104 and/or the suppressor 106), at any given electron energy below $E_{carnot}$ the net flow of electrons go from the anode 108 to the cathode 102, expending potential energy $V_0$ per electron to transport heat. Therefore, in an embodiment where the apparatus is an electricity-producing heat engine, the electrons from the anode having energies less than $E_{carnot}$ are blocked by the suppressor 106, reducing the loss of thermodynamic efficiency.

An electron at energy $E_{carnot}$ takes away $E_{carnot}$ from the hot cathode 102 upon emission, and is replaced by an electron with average energy $\mu_c$, so the net heat loss due to the emission of this electron at the hot plate

is $V_0/\eta_{carnot}$. Thus, the ratio of useful-energy-gained to heat-loss is $\eta_{carnot}$, and we conclude that emitted electrons of energy $E_{carnot}$ are Carnot efficient, hence the name.

Because the first set of electrons 206 has momentum in the y- and z- directions (128, 130) as well as in the x-direction (126), in an embodiment in which electron flow from the cathode 102 below the Carnot-efficiency energy $E_{carnot}$ is blocked, the gate electric potential $E_g$ (204) is slightly below the Carnot-efficiency energy $E_{carnot}$:

$$E_g \approx E_{carnot} - kT_c$$

or,

$$E_g \approx \frac{\mu_a T_c - \mu_c T_a}{T_c - T_a} - kT_c$$

where $kT_c$ represents the average energy of the electrons in the y- and z- directions (128, 130) combined. The suppressor electric potential $E_s$ (210) may be selected to be the same as the gate electric potential $E_g$ (204).

In some embodiments, the gate electric potential 204 and the suppressor electric potential 210 may have other values. For example, one or both of the gate and/or suppressor electric potentials 204, 210 may be lower than previously described. In one embodiment, the apparatus is configured such that the peak of the portion of the potential 216 that is between the cathode 102 and the gate 104 is around the Carnot-efficiency energy $E_{carnot}$, and/or the peak of the portion of the potential 216 that is between the suppressor 106 and the anode 108 is around the Carnot-efficiency energy $E_{carnot}$. In such an embodiment the efficiency of the apparatus may be different from previously described. These are just a few examples of potentials that may be applied to the gate 104 and/or the suppressor 106, and the actual potentials at the gate 104 and suppressor 106 may depend on the particular application and the selected energy ranges of electron emission to be screened from the cathode 102 and the anode 108. While in general, the sign of net electron-carried heat flow matches that of the net electron current flow, for some embodiments the different energy weighting of different portions of the electron distribution may result in opposite net flow of electron-carried heat and electron current.

The separations between the different elements 102, 104, 106 and 108 depend on the particular embodiment. For example, in some embodiments the apparatus 100 is a nanoscale device. In this embodiment, the cathode 102 and anode 108 may be separated by a distance 122 that is 10-1000 nm, the cathode 102 and gate 104 may be separated by a distance 116 that is 1-100 nm, and the anode 108 and the suppressor 106 may be separated by a distance 120 that is 1-100 nm. These ranges are exemplary embodiments and not meant to be limiting. In the case where the apparatus 100 is a nanoscale device, the lower limit of distances 116, 118, 120, and/or 122 may be at least partially determined by fabrication technology that is evolving. To illustrate existing technology for producing small separations, cathode-gate and suppressor-anode separations 116, 120 on the order of 1 nm may be achieved by depositing a nm scale dielectric layer on the cathode 102 and/or anode 108 and depositing the gate 104 and/or suppressor 106 on the dielectric layer. Further, in cases where the cathode 102 includes one or more field emission enhancement features 103, the cathode-gate separation 116 may be at least partially determined by the length of the feature 103 in the x-direction 126. For example, if the length of the feature 103 in the x-direction 126 was 5 nm, the cathode-gate separation 116 would be at least 5 nm.

In other embodiments the apparatus is larger than nanoscale, and exemplary separation distances 116, 118, 120, and/or 122 may range between the nanometer to millimeter scale. However, this scale is again exemplary and not limiting, and the length scales 116, 118, 120, 122 may be selected at least partially based on operating parameters of other gridded electron emitting devices such as vacuum tubes.

The cathode and anode work functions 213, 219 are determined by the material of the cathode 102 and anode 108 and may be selected to be as small as possible. The cathode and anode may comprise different materials. One or both materials can include metal and/or semiconductor, and the material(s) of the cathode 102 and/or anode 108 may have an asymmetric Fermi surface having a preferred Fermi surface orientation relative to the cathode or anode surface. An oriented asymmetric Fermi surface may be useful in increasing the fraction of electrons emitted normally to the surface and in decreasing the electron's transverse momentum and associated energy. In some embodiments, it is useful to reduce the electron current emitted from one of the surfaces (such as reducing anode emission current in an electricity producing heat engine, or reducing cathode emission current in an electricity consuming heat engine). This reduction may utilize an asymmetric Fermi surface which reduces momentum components normal to the surface. This reduction may involve minimization of the material's density of states (such as the bandgap of a semiconductor) at selected electron energies involved in the device operation.

Although the embodiments described with respect to FIG. 2 correspond to a heat engine, a device not being part of the present invention as shown in FIG. 1 may be configured, for example, as a heat pump or a refrigerator. Where the apparatus of FIG. 1 is configured as a heat pump, the bias $V_0$ is applied to the cathode 102 instead of to the anode 108 as shown in FIG. 2. Where the apparatus of FIG. 1 is configured as a refrigerator to cool the anode 108, the bias $V_0$ (202) is applied to the anode and the suppressor electric potential 210 and gate electric potential 204 may be chosen to be substantially below the Carnot-efficiency energy $E_{carnot}$. In this case, net current flow and heat transport is from the anode to the cathode..

In some embodiments the apparatus 100 further includes a screen grid 302 positioned between the gate 104 and the suppressor 106, the screen grid 302 being receptive to a fourth power source 304 to produce a screen grid electric potential. The screen grid electric potential can be chosen to vary the electric potential 216 between the gate 104 and the suppressor 106, and to accelerate electrons to another spatial region and thus reduce the effects of the space charge electric potential on the field emission regions of the cathode and/or anode.

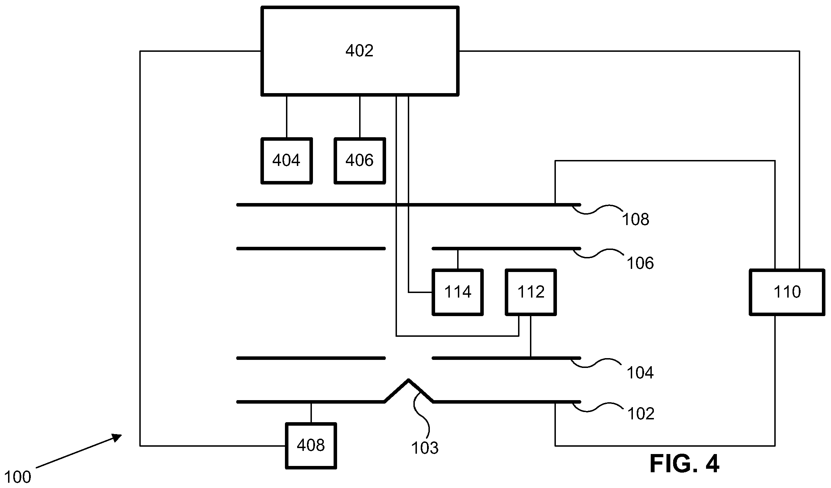

In an embodiment shown in FIG. 4, the apparatus 100 further comprises circuitry 402 operably connected to at least one of the first, second and third power sources 110, 112 and 114 to vary at least one of the anode, gate and suppressor electric potentials 202, 204 and 210. The circuitry 402 is receptive to signals to determine a relative power output and/or thermodynamic efficiency of the apparatus 100 and to dynamically vary at least one of the first, gate and suppressor electric potentials 202, 204, 210 responsive to the determined relative power output and/or thermodynamic efficiency. The apparatus 100 may further comprise a meter 404 configured to measure a current at the anode 108, and wherein the circuitry 402 is responsive to the measured current to vary at least one of the first, gate and suppressor electric potentials 202, 204 and 210. The apparatus 100 may further comprise a meter 406 configured to measure a temperature at the anode 108, and wherein the circuitry 402 is responsive to the measured temperature to vary at least one of the anode, gate and suppressor electric potentials 202, 204 and 210. The apparatus 100 may further comprise a meter 408 configured to measure a temperature at the cathode 102, and wherein the circuitry 402 is responsive to the measured temperature to vary at least one of the anode, gate and suppressor electric potentials 202, 204 and 210.

In some embodiments the circuitry 402 may be configured to iteratively determine optimal anode, gate, and suppressor electric potentials 202, 204, 210. For example, the circuitry 402 may be operably connected to the meter 404 configured to measure a current at the anode 108, and may iteratively change one of the anode, gate, and suppressor potentials to maximize the current at the anode.

Further, the circuitry 402 may be configured to iteratively determine optimal cathode 102 and anode 108 temperatures. For example, as described above relative to electric potentials, the circuitry 402 may be operably connected to the meter 404 configured to measure a current at the anode 108, and may iteratively change one of the cathode 102 and anode 108 temperatures to maximize the current at the anode 108.

In some embodiments the gate and suppressor electric potentials 204, 210 may be varied as a function of time. For example, the gate electric potential 204 may be switched on to release the first set of electrons 206 from the anode, and switched off once the first set of electrons 206 has passed through the gate 104. The suppressor electric potential 210 may be switched on to accelerate the first set of electrons 206 towards the anode 108, and switched off once the first set of electrons 206 has passed through the suppressor 106. Such an embodiment assumes high switching speeds. In some embodiments, switching such as that described above occurs cyclically and responsive to the circuitry 402.

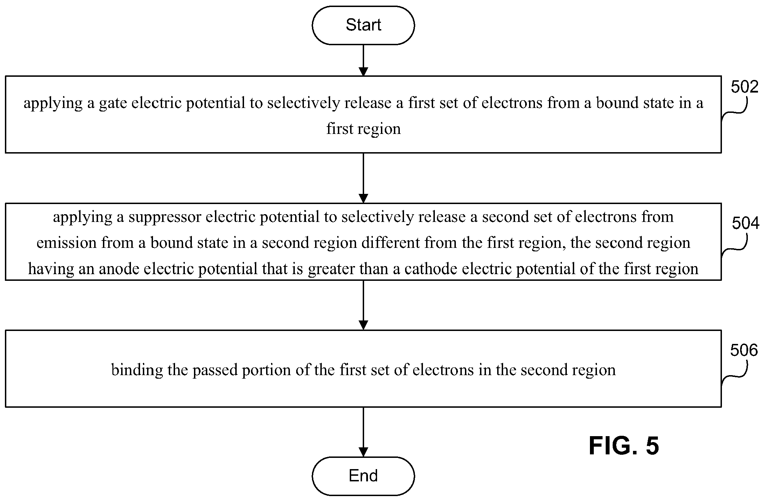

As depicted in the Flow Chart of FIG. 5, a method comprises: (502) applying a gate electric potential 204 to selectively release a first set of electrons 206 from a bound state in a first region (where the first region corresponds to the cathode 102); (504) applying a suppressor electric potential 210 to selectively release a second set of electrons from emission from a bound state in a second region different from the first region, the second region having an anode electric potential that is greater than a cathode electric potential of the first region (where in one embodiment the second region corresponds to the anode 108), the second region having an anode electric potential 202 that is greater than a cathode electric potential of the first region; and (506) passing a portion of the first set of electrons 206 through a gas-filled region and binding the passed portion of the first set of electrons 206 in the second region.

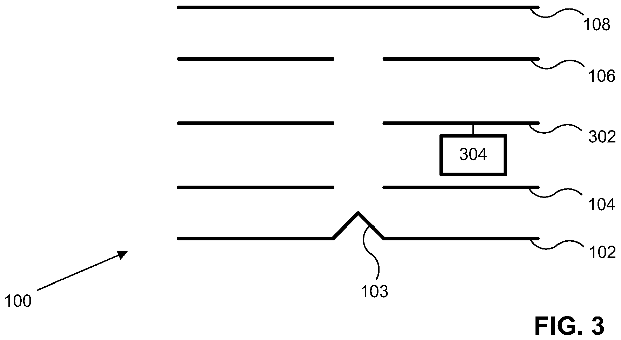

Various methods have been described herein with respect to FIGS. 1-4 and may apply to the methods depicted in the flow chart of FIG. 5. For example, methods related to the circuitry 402 and another apparatus shown in FIG. 4 apply to the method of FIG. 5, where the first region includes at least a portion of the cathode 102 and the second region includes at least a portion of the anode 108.

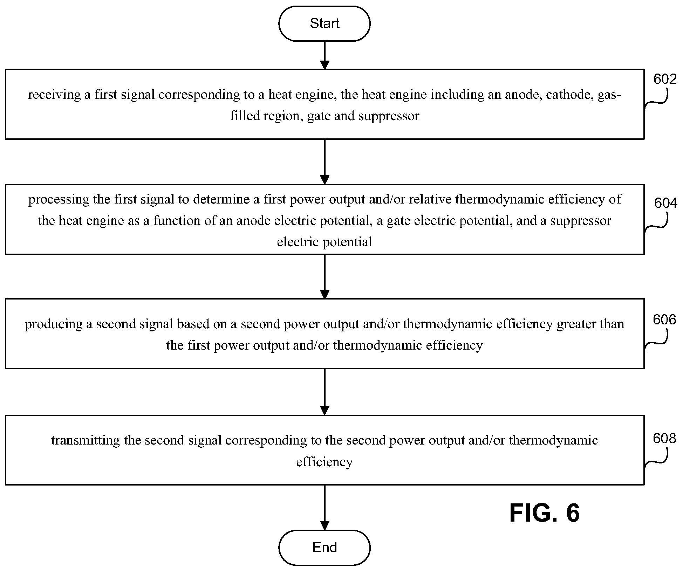

In the flow chart of FIG. 6, a method comprises (602) receiving a first signal corresponding to a heat engine, the heat engine including an anode, cathode, gas-filled region, gate and suppressor; (604) processing the first signal to determine a first power output and/or relative thermodynamic efficiency of the heat engine as a function of an anode electric potential, a gate electric potential, and a suppressor electric potential; (606) producing a second signal based on a second power output and/or thermodynamic efficiency greater than the first power output and/or thermodynamic efficiency; and (608) transmitting the second signal corresponding to the second power output and/or thermodynamic efficiency.

The method of FIG. 6 is applicable, for example, in an embodiment where a device as shown in FIG. 1 is received and the optimal parameters for a heat engine must be determined.

The first signal includes a user input including known dimensions, materials, and temperatures of the cathode and anode. In this embodiment, the known parameters may be used to calculate the optimal electric potentials applied to the anode 108, gate 104, and suppressor 106.

The first signal includes a measured parameter such as a current at the anode 108, where the electric potentials are varied to optimize the current at the anode. Such a scenario has been described with respect to the circuitry 402 shown in FIG. 4.

Producing the second signal may further include determining a change in at least one of the anode, gate and suppressor potentials, and the method may further comprise varying at least one of the anode, gate, and suppressor potentials in response to the determined change.

Producing the second signal may further include determining a change in at least one of a cathode and an anode temperature, and the method may further comprise varying at least one of the cathode and anode temperatures in response to the determined change.

The anode, cathode, gate, and suppressor are separated by cathode-gate, gate-suppressor, and suppressor-anode separations, and producing the second signal may include determining a change in at least one of the cathode-gate, gate-suppressor, and suppressor-anode separations, and the method may further comprise varying at least one of the cathode-gate, gate-suppressor, and suppressor-anode separations in response to the determined change. For example, one or more of the cathode-gate, gate-suppressor, and suppressor-anode separations (116, 118, 120) may be variable (such as where one or more of the cathode 102, gate 104, suppressor 106, and anode 108 are mounted on a MEMS) and may be varied to optimize the efficiency of the device.

The received first signal corresponds to an anode current, and processing the first signal to determine a first relative thermodynamic efficiency of the heat engine as a function of an anode electric potential, a gate electric potential, and a suppressor electric potential includes determining the relative thermodynamic efficiency based on the anode current.

The "relative power output" and/or "relative thermodynamic efficiency" may be an actual power output and/or thermodynamic efficiency or it may be a quantity that is indicative of the power output and/or thermodynamic efficiency, such as the current at the anode.

Those skilled in the art will appreciate that the foregoing specific exemplary processes and/or devices and/or technologies are representative of more general processes and/or devices and/or technologies taught elsewhere herein, such as in the claims filed herewith and/or elsewhere in the present application.

Those having skill in the art will recognize that the state of the art has progressed to the point where there is little distinction left between hardware, software, and/or firmware implementations of aspects of systems; the use of hardware, software, and/or firmware is generally (but not always, in that in certain contexts the choice between hardware and software can become significant) a design choice representing cost vs. efficiency tradeoffs. Those having skill in the art will appreciate that there are various vehicles by which processes and/or systems and/or other technologies described herein can be effected (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; alternatively, if flexibility is paramount, the implementer may opt for a mainly software implementation; or, yet again alternatively, the implementer may opt for some combination of hardware, software, and/or firmware. Hence, there are several possible vehicles by which the processes and/or devices and/or other technologies described herein may be effected, none of which is inherently superior to the other in that any vehicle to be utilized is a choice dependent upon the context in which the vehicle will be deployed and the specific concerns (e.g., speed, flexibility, or predictability) of the implementer, any of which may vary. Those skilled in the art will recognize that optical aspects of implementations will typically employ optically-oriented hardware, software, and or firmware.

In some implementations described herein, logic and similar implementations may include software or other control structures. Electronic circuitry, for example, may have one or more paths of electrical current constructed and arranged to implement various functions as described herein. In some implementations, one or more media may be configured to bear a device-detectable implementation when such media hold or transmit a device detectable instructions operable to perform as described herein. In some variants, for example, implementations may include an update or modification of existing software or firmware, or of gate arrays or programmable hardware, such as by performing a reception of or a transmission of one or more instructions in relation to one or more operations described herein. Alternatively or additionally, in some variants, an implementation may include special-purpose hardware, software, firmware components, and/or general-purpose components executing or otherwise invoking special-purpose components. Specifications or other implementations may be transmitted by one or more instances of tangible transmission media as described herein, optionally by packet transmission or otherwise by passing through distributed media at various times.

Alternatively or additionally, implementations may include executing a special-purpose instruction sequence or invoking circuitry for enabling, triggering, coordinating, requesting, or otherwise causing one or more occurrences of virtually any functional operations described herein. In some variants, operational or other logical descriptions herein may be expressed as source code and compiled or otherwise invoked as an executable instruction sequence. In some contexts, for example, implementations may be provided, in whole or in part, by source code, such as C++, or other code sequences. In other implementations, source or other code implementation, using commercially available and/or techniques in the art, may be compiled/implemented/translated/converted into a high-level descriptor language (e.g., initially implementing described technologies in C or C++ programming language and thereafter converting the programming language implementation into a logic-synthesizable language implementation, a hardware description language implementation, a hardware design simulation implementation, and/or other such similar mode(s) of expression). For example, some or all of a logical expression (e.g., computer programming language implementation) may be manifested as a Verilog-type hardware description (e.g., via Hardware Description Language (HDL) and/or Very High Speed Integrated Circuit Hardware Descriptor Language (VHDL)) or other circuitry model which may then be used to create a physical implementation having hardware (e.g., an Application Specific Integrated Circuit). Those skilled in the art will recognize how to obtain, configure, and optimize suitable transmission or computational elements, material supplies, actuators, or other structures in light of these teachings.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software, firmware, or virtually any combination thereof. In one embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link (e.g., transmitter, receiver, transmission logic, reception logic, etc.), etc.).

In a general sense, those skilled in the art will recognize that the various embodiments described herein can be implemented, individually and/or collectively, by various types of electro-mechanical systems having a wide range of electrical components such as hardware, software, firmware, and/or virtually any combination thereof; and a wide range of components that may impart mechanical force or motion such as rigid bodies, spring or torsional bodies, hydraulics, electro-magnetically actuated devices, and/or virtually any combination thereof. Consequently, as used herein "electro-mechanical system" includes, but is not limited to, electrical circuitry operably coupled with a transducer (e.g., an actuator, a motor, a piezoelectric crystal, a Micro Electro Mechanical System (MEMS), etc.), electrical circuitry having at least one discrete electrical circuit, electrical circuitry having at least one integrated circuit, electrical circuitry having at least one application specific integrated circuit, electrical circuitry forming a general purpose computing device configured by a computer program (e.g., a general purpose computer configured by a computer program which at least partially carries out processes and/or devices described herein, or a microprocessor configured by a computer program which at least partially carries out processes and/or devices described herein), electrical circuitry forming a memory device (e.g., forms of memory (e.g., random access, flash, read only, etc.)), electrical circuitry forming a communications device (e.g., a modem, communications switch, optical-electrical equipment, etc.), and/or any non-electrical analog thereto, such as optical or other analogs. Those skilled in the art will also appreciate that examples of electro-mechanical systems include but are not limited to a variety of consumer electronics systems, medical devices, as well as other systems such as motorized transport systems, factory automation systems, security systems, and/or communication/computing systems. Those skilled in the art will recognize that electro-mechanical as used herein is not necessarily limited to a system that has both electrical and mechanical actuation except as context may dictate otherwise.

In a general sense, those skilled in the art will recognize that the various aspects described herein which can be implemented, individually and/or collectively, by a wide range of hardware, software, firmware, and/or any combination thereof can be viewed as being composed of various types of "electrical circuitry." Consequently, as used herein "electrical circuitry" includes, but is not limited to, electrical circuitry having at least one discrete electrical circuit, electrical circuitry having at least one integrated circuit, electrical circuitry having at least one application specific integrated circuit, electrical circuitry forming a general purpose computing device configured by a computer program (e.g., a general purpose computer configured by a computer program which at least partially carries out processes and/or devices described herein, or a microprocessor configured by a computer program which at least partially carries out processes and/or devices described herein), electrical circuitry forming a memory device (e.g., forms of memory (e.g., random access, flash, read only, etc.)), and/or electrical circuitry forming a communications device (e.g., a modem, communications switch, optical-electrical equipment, etc.). Those having skill in the art will recognize that the subject matter described herein may be implemented in an analog or digital fashion or some combination thereof.

Those skilled in the art will recognize that at least a portion of the devices and/or processes described herein can be integrated into an image processing system. Those having skill in the art will recognize that a typical image processing system generally includes one or more of a system unit housing, a video display device, memory such as volatile or non-volatile memory, processors such as microprocessors or digital signal processors, computational entities such as operating systems, drivers, applications programs, one or more interaction devices (e.g., a touch pad, a touch screen, an antenna, etc.), control systems including feedback loops and control motors (e.g., feedback for sensing lens position and/or velocity; control motors for moving/distorting lenses to give desired focuses). An image processing system may be implemented utilizing suitable commercially available components, such as those typically found in digital still systems and/or digital motion systems.

Those skilled in the art will recognize that at least a portion of the devices and/or processes described herein can be integrated into a data processing system. Those having skill in the art will recognize that a data processing system generally includes one or more of a system unit housing, a video display device, memory such as volatile or non-volatile memory, processors such as microprocessors or digital signal processors, computational entities such as operating systems, drivers, graphical user interfaces, and applications programs, one or more interaction devices (e.g., a touch pad, a touch screen, an antenna, etc.), and/or control systems including feedback loops and control motors (e.g., feedback for sensing position and/or velocity; control motors for moving and/or adjusting components and/or quantities). A data processing system may be implemented utilizing suitable commercially available components, such as those typically found in data computing/communication and/or network computing/communication systems.

Those skilled in the art will recognize that it is common within the art to implement devices and/or processes and/or systems, and thereafter use engineering and/or other practices to integrate such implemented devices and/or processes and/or systems into more comprehensive devices and/or processes and/or systems. That is, at least a portion of the devices and/or processes and/or systems described herein can be integrated into other devices and/or processes and/or systems via a reasonable amount of experimentation. Those having skill in the art will recognize that examples of such other devices and/or processes and/or systems might include - as appropriate to context and application -- all or part of devices and/or processes and/or systems of (a) an air conveyance (e.g., an airplane, rocket, helicopter, etc.), (b) a ground conveyance (e.g., a car, truck, locomotive, tank, armored personnel carrier, etc.), (c) a building (e.g., a home, warehouse, office, etc.), (d) an appliance (e.g., a refrigerator, a washing machine, a dryer, etc.), (e) a communications system (e.g., a networked system, a telephone system, a Voice over IP system, etc.), (f) a business entity (e.g., an Internet Service Provider (ISP) entity such as Comcast Cable, Qwest, Southwestern Bell, etc.), or (g) a wired/wireless services entity (e.g., Sprint, Cingular, Nextel, etc.), etc.

In certain cases, use of a system or method may occur in a territory even if components are located outside the territory. For example, in a distributed computing context, use of a distributed computing system may occur in a territory even though parts of the system may be located outside of the territory (e.g., relay, server, processor, signal-bearing medium, transmitting computer, receiving computer, etc. located outside the territory).

A sale of a system or method may likewise occur in a territory even if components of the system or method are located and/or used outside the territory.

Further, implementation of at least part of a system for performing a method in one territory does not preclude use of the system in another territory.

One skilled in the art will recognize that the herein described components (e.g., operations), devices, objects, and the discussion accompanying them are used as examples for the sake of conceptual clarity and that various configuration modifications are contemplated. Consequently, as used herein, the specific exemplars set forth and the accompanying discussion are intended to be representative of their more general classes. In general, use of any specific exemplar is intended to be representative of its class, and the non-inclusion of specific components (e.g., operations), devices, and objects should not be taken limiting.

With respect to the use of substantially any plural and/or singular terms herein, those having skill in the art can translate from the plural to the singular and/or from the singular to the plural as is appropriate to the context and/or application. The various singular/plural permutations are not expressly set forth herein for sake of clarity.

The herein described subject matter sometimes illustrates different components contained within, or connected with, different other components. It is to be understood that such depicted architectures are merely exemplary, and that in fact many other architectures may be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components, and/or wirelessly interactable, and/or wirelessly interacting components, and/or logically interacting, and/or logically interactable components.

In some instances, one or more components may be referred to herein as "configured to," "configured by," "configurable to," "operable/operative to," "adapted/adaptable," "able to," "conformable/conformed to," etc. Those skilled in the art will recognize that such terms (e.g. "configured to") can generally encompass active-state components and/or inactive-state components and/or standby-state components, unless context requires otherwise.

Aspects of the subject matter described herein are set out in the following numbered clauses which are not part of the claimed invention. The invention is only defined by the claims.

1. An apparatus comprising:

a cathode;
an anode, wherein the anode and cathode are receptive to a first power source to produce an anode electric potential higher than a cathode electric potential;
a gate positioned between the anode and the cathode, the gate being receptive to a second power source to produce a gate electric potential selected to induce electron emission from the cathode for a first set of electrons having energies above a first threshold energy;
a suppressor positioned between the gate and the anode, the suppressor being receptive to a third power source to produce a suppressor electric potential selected to induce electron emission from the anode;
at least one region including gas located between the cathode and anode; and
at least one path traversable for a first portion of the first set of electrons, extending from the cathode, through the gate, through the region including gas, through the suppressor, and to the anode.

2. The apparatus of Clause 1 wherein the first threshold energy is substantially equal to the Carnot-efficiency energy.

3. The apparatus of Clause 1 wherein suppressor electric potential is further selected to block electron emission from the anode for a second set of electrons having energies below a second threshold energy.

4. The apparatus of Clause 3 wherein the first threshold energy is substantially equal to the second threshold energy.

5. The apparatus of Clause 1 further comprising: a dielectric layer supported by the cathode, the dielectric layer being supportive of the gate.

6. The apparatus of Clause 1 wherein the cathode and anode are separated by a distance that is 10-1000 nm.

7. The apparatus of Clause 1 wherein the cathode and the gate are separated by a distance that is 1-100 nm.

8. The apparatus of Clause 1 wherein the anode and the suppressor are separated by a distance that is 1-100 nm.

9. The apparatus of Clause 1 further comprising a screen grid positioned between the gate and the suppressor, the screen grid being receptive to a fourth power source to produce a screen grid electric potential.

10. The apparatus of Clause 1 wherein the cathode includes at least one field emission enhancement feature.

11. The apparatus of Clause 1 further comprising: circuitry operably connected to at least one of the first, second and third power sources to vary at least one of the anode, gate and suppressor electric potentials relative to the cathode potential.

12. The apparatus of Clause 11 wherein the circuitry is receptive to signals to determine a relative thermodynamic efficiency of the apparatus and to dynamically vary at least one of the anode, gate and suppressor electric potentials responsive to the determined relative thermodynamic efficiency.

13. The apparatus of Clause 11 wherein the circuitry is receptive to signals to determine a relative power density of the apparatus and to dynamically vary at least one of the anode, gate, and suppressor electric potentials responsive to the determined relative power density.

14. The apparatus of Clause 1 further comprising:

a housing having a volume arranged to support the cathode, anode, gate, and suppressor, and supportive of an internal pressure lower than atmospheric pressure.

15. The apparatus of Clause 14 further comprising: a pump operably connected to the housing to change the internal pressure.

16. A method comprising:

applying a gate electric potential to selectively release a first set of electrons from a bound state in a first region;
applying a suppressor electric potential to selectively release a second set of electrons from emission from a bound state in a second region different from the first region, the second region having an anode electric potential that is greater than a cathode electric potential of the first region; and
passing a portion of the first set of electrons through a gas-filled region and binding the passed portion of the first set of electrons in the second region.

17. The method of Clause 16 wherein the bound, passed portion of the first set of electrons in the second region form a current, and further comprising:

measuring a property of the current; and
varying at least one of the gate electric potential, suppressor electric potential, and anode electric potential according to the measured property of the current.

18. The method of Clause 16 wherein the bound, passed portion of the first set of electrons in the second region form a current, and further comprising: powering a device with the current.

19. The method of Clause 16 further comprising:

measuring a temperature of the first region; and
varying at least one of the gate electric potential, suppressor electric potential, and anode electric potential according to the measured temperature of the first region.

20. The method of Clause 16 further comprising:

measuring a temperature of the second region; and
varying at least one of the gate electric potential, suppressor electric potential, and anode electric potential according to the measured temperature of the second region.

21. The method of Clause 16 further comprising:

determining a relative thermodynamic efficiency; and
varying at least one of the gate and suppressor electric potentials in response to the determined relative thermodynamic efficiency.

22. The method of Clause 21 wherein determining a relative thermodynamic efficiency includes: measuring at least one of a current in the second region, a temperature in the second region, and a temperature in the first region.

23. The method of Clause 16 further comprising:

heating the first region; and
varying the gate electric potential according to a change in temperature of the first region.

24. The method of Clause 16 wherein further comprising:

cooling the second region; and
varying the gate electric potential according to a change in temperature of the second region.

25. The method of Clause 16 further comprising: varying at least one of the gate electric potential, suppressor electric potential, and anode electric potential as a function of time.

26. The method of Clause 16 further comprising: accelerating the first set of electrons with the gate and suppressor electric potentials in a first direction.

27. The method of Clause 16 further comprising: applying the suppressor potential to pass at least a portion of the first set of electrons while selectively blocking the second set of electrons.

28. The method of Clause 16 further comprising: passing a portion of the second set of electrons through a gas-filled region and binding the passed portion of the second set of electrons in the first region.

29. An apparatus comprising:

circuitry configured to receive a first signal corresponding to a heat engine, the heat engine including an anode, cathode, gas-filled region, gate and suppressor;
circuitry configured to process the first signal to determine a first relative power output of the heat engine as a function of an anode electric potential, a gate electric potential, and a suppressor electric potential;
circuitry configured to produce a second signal based on a second power output greater than the first power output; and
circuitry configured to transmit the second signal corresponding to the second power output.

30. The apparatus of Clause 29 wherein the circuitry configured to produce the second signal includes: circuitry configured to determine a change in at least one of the anode, gate and suppressor electric potentials.

31. The apparatus of Clause 30 further comprising: circuitry configured to vary at least one of the anode, gate, and suppressor electric potentials in response to the determined change.

32. A heat engine comprising:

a cathode having a first temperature;
an anode having a second temperature lower than the first temperature, wherein the anode and cathode are receptive to a first power source to produce an anode electric potential higher than a cathode electric potential;
a gate positioned between the anode and the cathode, the gate being receptive to a second power source to produce a gate electric potential selected to induce electron emission from the cathode for a first set of electrons having energies above a first threshold energy;
a suppressor positioned between the gate and the anode, the suppressor being receptive to a third power source to produce a suppressor electric potential selected to induce electron emission from the anode;
at least one region including gas located between the cathode and anode; and
at least one path traversable for a portion of the first set of electrons extending from the cathode, through the gate, through the region including gas, through the suppressor, and to the anode.

33. An apparatus comprising:

a cathode;
an anode, wherein the anode and cathode are receptive to a first power source to produce an anode electric potential higher than a cathode electric potential;
a gate positioned between the anode and the cathode, the gate being receptive to a second power source to produce a gate electric potential selected to induce electron emission from the cathode for a first set of electrons having energies above a first threshold energy;
a suppressor positioned between the gate and the anode, the suppressor being receptive to a third power source to produce a suppressor electric potential, wherein the suppressor electric potential is selected to be less than a sum of the anode electric potential and an anode work function;
at least one region including gas located between the cathode and anode; and
at least one path traversable for a first portion of the first set of electrons, extending from the cathode, through the gate, through the region including gas, through the suppressor, and to the anode.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true scope of the subject matter described herein. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein may generally be performed in any order. Also, although various operational flows are presented in a sequence(s), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims. What is claimed is

## Claims

1. An apparatus (100) configured as a heat engine comprising:

   a cathode (102);
   an anode (108), wherein the anode and cathode are adapted to be receptive to a first power source (110) to produce an anode electric potential (202) higher than a cathode electric potential;
   a gate (104) positioned between the anode and the cathode, the gate being adapted to be receptive to a second power source (112) to produce a gate electric potential (204) selected to induce electron emission from the cathode for a first set of electrons (206) having energies above a first threshold energy (208);
   a suppressor (106) positioned between the gate and the anode, the suppressor being adapted to be receptive to a third power source (114) to produce a suppressor electric potential (210) selected to induce electron emission from the anode;
   at least one region including gas located between the cathode and anode;
   at least one path traversable for a first portion of the first set of electrons (206), extending from the cathode, through the gate, through the region including gas, through the suppressor, and to the anode; and

circuitry (402) operably connected to at least one of the first, second and third power sources adapted to vary at least one of the anode, gate and suppressor electric potentials relative to the cathode potential, wherein the circuitry is adapted to be receptive to signals to determine a relative thermodynamic efficiency of the apparatus and to dynamically vary at least one of the anode, gate and suppressor electric potentials responsive to the determined relative thermodynamic efficiency.

2. The apparatus of Claim 1 wherein the first threshold energy is substantially equal to the Carnot-efficiency energy.

3. The apparatus of Claim 1 or Claim 2 wherein suppressor electric potential is further selected to block electron emission from the anode for a second set of electrons having energies below a second threshold energy.

4. The apparatus of Claim 3 wherein the first threshold energy is substantially equal to the second threshold energy.

5. The apparatus of any one of the preceding Claims further comprising at least one of:

a dielectric layer supported by the cathode, the dielectric layer being supportive of the gate; a screen grid (302) positioned between the gate and the suppressor, the screen grid being adapted to be receptive to a fourth power source (304) to produce a screen grid electric potential; a housing having a volume arranged to support the cathode, anode, gate, and suppressor, and supportive of an internal pressure lower than atmospheric pressure.

6. The apparatus of any one of the preceding Claims wherein the circuitry is further adapted to be receptive to signals to determine a relative power density of the apparatus and to dynamically vary at least one of the anode, gate, and suppressor electric potentials responsive to the determined relative power density.

7. The apparatus of Claim 5 further comprising: a pump operably connected to the housing to change the internal pressure.

8. The apparatus of any one of the preceding Claims wherein the cathode and anode are separated by a distance that is 10-1000 nm, for example wherein the cathode and the gate are separated by a distance that is 1-100 nm, for example wherein the anode and the suppressor are separated by a distance that is 1-100 nm.

9. The apparatus of any one of the preceding Claims wherein the cathode includes at least one field emission enhancement feature.

10. A method of operating an apparatus (100) configured as a heat engine comprising:

applying a gate electric potential (204) to selectively release a first set of electrons (206) from a bound state in a first region, wherein the first region corresponds to a cathode (102); applying a suppressor electric potential (210) to selectively release a second set of electrons from emission from a bound state in a second region different from the first region, wherein the second region corresponds to an anode (108), the second region having an anode electric potential that is greater than a cathode electric potential of the first region; passing a portion of the first set of electrons through a gas-filled region and binding the passed portion of the first set of electrons in the second region; determining a relative thermodynamic efficiency; and varying at least one of the gate and suppressor electric potentials in response to the determined relative thermodynamic efficiency.

11. The method of Claim 10 wherein the bound, passed portion of the first set of electrons in the second region form a current, and further comprising at least one of:

measuring a property of the current and varying at least one of the gate electric potential, suppressor electric potential, and anode electric potential according to the measured property of the current; powering a device with the current.

12. The method of any one of Claims 10 or 11 further comprising:

measuring a temperature of the first or second region; and varying at least one of the gate electric potential, suppressor electric potential, and anode electric potential according to the measured temperature of the first or second region.

13. The method of Claim 10 wherein determining a relative thermodynamic efficiency includes: measuring at least one of a current in the second region, a temperature in the second region, and a temperature in the first region.

14. The method of Claim 10 further comprising one of:

heating the first region and varying the gate electric potential according to a change in temperature of the first region;
cooling the second region and varying the gate electric potential according to a change in temperature of the second region;
varying at least one of the gate electric potential, suppressor electric potential, and anode electric potential as a function of time;
accelerating the first set of electrons with the gate and suppressor electric potentials in a first direction;
applying the suppressor potential to pass at least a portion of the first set of electrons while selectively blocking the second set of electrons;
passing a portion of the second set of electrons through a gas-filled region and binding the passed portion of the second set of electrons in the first region.

**Patentansprüche**

1. Vorrichtung (100), ausgelegt als Wärmekraftmaschine, umfassend:

eine Kathode (102);
eine Anode (108), wobei die Anode und die Kathode eingerichtet sind, um für eine erste Leistungsquelle (110) rezeptiv zu sein, um ein elektrisches Anodenpotenzial (202) zu erzeugen, das höher ist als ein elektrisches Kathodenpotenzial;
ein Gate (104), positioniert zwischen der Anode und der Kathode, wobei das Gate eingerichtet ist, um für eine zweite Leistungsquelle (112) rezeptiv zu sein, um ein elektrisches Gate-Potenzial (204) zu erzeugen, ausgewählt zum Induzieren von Elektronenemission von der Kathode für eine erste Gruppe von Elektronen (206), aufweisend Energien oberhalb eines ersten Energieschwellenwerts (208);
einen Suppressor (106), positioniert zwischen dem Gate und der Anode, wobei der Suppressor eingerichtet ist, um für eine dritte Leistungsquelle (114) rezeptiv zu sein, um ein elektrisches Suppressorpotenzial (210) zu erzeugen, ausgewählt zum Induzieren von Elektronenemission von der Anode;
mindestens eine zwischen der Kathode und der Anode angeordnete Region, aufweisend Gas;
mindestens einen für einen ersten Teil der ersten Gruppe von Elektronen (206) überquerbaren Pfad, verlaufend von der Kathode durch das Gate, durch die Gas aufweisende Region, durch den Suppressor und zur Anode; und
Schaltung (402), wirkverbunden mit mindestens einer der ersten, der zweiten und der dritten Leistungsquelle, eingerichtet, um die elektrischen Potenziale mindestens einer der Anode, des Gates und des Suppressors relativ zum Kathodenpotenzial zu ändern, wobei die Schaltung eingerichtet ist, um für Signale rezeptiv zu sein, um eine relative thermodynamische Effizienz der Vorrichtung zu ermitteln und um die elektrischen Potenziale mindestens einer der Anode, des Gates und des Suppressors dynamisch zu verändern, die auf die ermittelte relative thermodynamische Effizienz reagieren.

2. Vorrichtung nach Anspruch 1, wobei der erste Energieschwellenwert im Wesentlichen gleich dem Carnot-Energie-Wirkungsgrad ist.

3. Vorrichtung nach Anspruch 1 oder Anspruch 2, wobei das elektrische Suppressorpotenzial ferner ausgewählt wird, um Elektronenemission von der Anode für eine zweite Gruppe von Elektronen zu blockieren, aufweisend Energien unterhalb eines zweiten Energieschwellenwerts.

4. Vorrichtung nach Anspruch 3, wobei der erste Energieschwellenwert im Wesentlichen gleich dem zweiten Energieschwellenwert ist.

5. Vorrichtung nach einem der vorstehenden Ansprüche, ferner umfassend mindestens eines von
einer durch die Kathode unterstützten dielektrischen Schicht, wobei die dielektrische Schicht das Gate unterstützt;
einem Schirmgitter (302), positioniert zwischen dem Gate und dem Suppressor, wobei das Schirmgitter eingerichtet ist, um für eine vierte Leistungsquelle (304) rezeptiv zu sein, um ein elektrisches Schirmgitterpotenzial zu erzeugen; einem Gehäuse, aufweisend ein Volumen, eingerichtet zum Unterstützen der Kathode, der Anode, des Gates und des Suppressors, und unterstützend einen internen Druck, der geringer ist als atmosphärischer Druck.

6. Vorrichtung nach einem der vorstehenden Ansprüche, wobei die Schaltung ferner eingerichtet ist, um auf Signale rezeptiv zu sein, um eine relative Leistungsdichte der Vorrichtung zu bestimmen und um die elektrischen Potenziale mindestens einer der Anode, des Gates und des Suppressors in Reaktion auf die festgelegte relative Leistungsdichte dynamisch zu ändern.

7. Vorrichtung nach Anspruch 5, ferner umfassend:
eine mit dem Gehäuse wirkverbundene Pumpe zum Ändern des internen Drucks.

8. Vorrichtung nach einem der vorstehenden Ansprüche, wobei die Kathode und die Anode durch eine Distanz getrennt sind, die 10-1000 nm beträgt, beispielsweise wobei die Kathode und das Gate durch eine Distanz getrennt sind, die 1-100 nm beträgt, beispielsweise wobei die Anode und der Suppressor durch eine Distanz getrennt sind, die 1-100 nm beträgt.

9. Vorrichtung nach einem der vorstehenden Ansprüche, wobei die Kathode mindestens ein Feldemissionsverstärkungsmerkmal aufweist.

10. Verfahren zum Betreiben einer Vorrichtung (100), ausgelegt als Wärmekraftmaschine, umfassend:

Beaufschlagen eines elektrischen Gate-Potenzials (204) zur selektiven Freisetzung einer ersten Gruppe von Elektronen (206) aus einem gebundenen Zustand in einer ersten Region, wobei die erste Region einer Kathode (102) entspricht;
Beaufschlagen eines elektrischen Suppressor-Potenzials (210) zur selektiven Freisetzung einer zweiten Gruppe von Elektronen von der Emission aus einem gebundenen Zustand in einer zweiten, von der ersten Region unterschiedlichen Region, wobei die zweite Region einer Anode (108) entspricht, wobei die zweite Region ein elektrisches Anodenpotenzial aufweist, das größer ist als ein elektrisches Kathodenpotenzial der ersten Region;
Leiten eines Teils der ersten Gruppe von Elektronen durch eine gasgefüllte Region und Binden des weitergeleiteten Teils der ersten Gruppe von Elektronen in der zweiten Region;
Bestimmen einer relativen thermodynamischen Effizienz; und
Ändern der elektrischen Potenziale des Gates und/oder des Suppressors in Reaktion auf die ermittelte relative thermodynamische Effizienz.

11. Verfahren nach Anspruch 10, wobei der gebundene weitergeleitete Teil der ersten Gruppe von Elektronen in der zweiten Region einen Strom bildet, und ferner umfassend mindestens eines von:

Messen einer Eigenschaft des Stroms und Ändern mindestens eines des elektrischen Gate-Potenzials, des elektrischen Suppressorpotenzials und des elektrischen Anodenpotenzials entsprechend der gemessenen Eigenschaft des Stroms;
Energieversorgung einer Einrichtung mit dem Strom.

12. Verfahren nach einem der Ansprüche 10 oder 11, ferner umfassend:

Messen einer Temperatur der ersten oder zweiten Region; und
Ändern mindestens eines des elektrischen Gate-Potenzials, des elektrischen Suppressorpotenzials und des elektrischen Anodenpotenzials entsprechend der gemessenen Temperatur der ersten oder zweiten Region.

13. Verfahren nach Anspruch 10, wobei das Ermitteln einer relativen thermodynamischen Effizienz aufweist:

Messen mindestens eines eines Stroms in der zweiten Region, einer Temperatur in der zweiten Region und einer Temperatur in der ersten Region.

14. Verfahren nach Anspruch 10, ferner umfassend eines von:

Erhitzen der ersten Region und Ändern des elektrischen Gate-Potenzials entsprechend einer Temperaturänderung der ersten Region;
Abkühlen der zweiten Region und Ändern des elektrischen Gate-Potenzials entsprechend einer Temperaturänderung der zweiten Region;
Ändern mindestens eines des elektrischen Gate-Potenzials, des elektrischen Suppressorpotenzials und des elektrischen Anodenpotenzials als Funktion der Zeit;
Beschleunigen der ersten Gruppe von Elektronen mit den elektrischen Potenzialen des Gates und des Suppressors in einer ersten Richtung;
Beaufschlagen des Suppressorpotenzials, um mindestens einen Teil der ersten Gruppe von Elektronen weiterzuleiten, während die zweite Gruppe von Elektronen selektiv blockiert wird;
Weiterleiten eines Teils der zweiten Gruppe von Elektronen durch eine gasgefüllte Region und Binden des weitergeleiteten Teils der zweiten Gruppe von Elektronen in der ersten Region.

**Revendications**

1. Appareil (100) configuré comme une machine thermique comprenant :

une cathode (102) ;
une anode (108), l'anode et la cathode étant adaptées pour pouvoir recevoir une première source d'alimentation (110) pour produire un potentiel électrique d'anode (202) supérieur à un potentiel électrique de cathode ;
une grille (104) positionnée entre l'anode et la cathode, la grille étant adaptée pour pouvoir recevoir une deuxième source d'alimentation (112) pour produire un potentiel électrique de grille (204) sélectionné pour induire l'émission d'électrons depuis la cathode pour un premier ensemble d'électrons (206) ayant des énergies supérieures à une première énergie seuil (208) ; une grille d'arrêt (106) positionnée entre la grille et l'anode, la grille d'arrêt étant adaptée pour pouvoir recevoir une troisième source d'alimentation (114) pour produire un potentiel électrique de grille d'arrêt (210) sélectionné pour induire l'émission d'électrons depuis l'anode ; au moins une région comportant du gaz située entre la cathode et l'anode ; au moins un chemin traversable pour une première partie du premier ensemble d'électrons (206), s'étendant depuis la cathode, par la grille, par la région comportant du gaz, par la grille d'arrêt, et jusqu'à l'anode ; et un circuit (402) fonctionnellement relié à au moins une des première, deuxième et troisième sources d'alimentation adapté pour faire varier au moins un des potentiels électriques d'anode, de grille et de grille d'arrêt par rapport au potentiel de cathode, le circuit étant adapté pour pouvoir recevoir des signaux pour déterminer un rendement thermodynamique relatif de l'appareil et pour faire varier dynamiquement au moins un des potentiels électriques d'anode, de grille et de grille d'arrêt en réponse au rendement thermodynamique relatif déterminé.

2. Appareil de la revendication 1 dans lequel la première énergie seuil est sensiblement égale à l'énergie du rendement de Carnot.

3. Appareil de la revendication 1 ou la revendication 2 dans lequel le potentiel électrique de grille d'arrêt est en outre sélectionné pour bloquer l'émission d'électrons depuis l'anode pour un deuxième ensemble d'électrons ayant des énergies inférieures à une deuxième énergie seuil.

4. Appareil de la revendication 3 dans lequel la première énergie seuil est sensiblement égale à la deuxième énergie seuil.

5. Appareil de l'une quelconque des revendications précédentes comprenant en outre au moins un élément parmi :

une couche diélectrique supportée par la cathode, la couche diélectrique supportant la grille ; une grille-écran (302) positionnée entre la grille et la grille d'arrêt, la grille-écran étant adaptée pour pouvoir recevoir une quatrième source d'alimentation (304) pour produire un potentiel électrique de grille-écran ; un boîtier ayant un volume agencé pour supporter la cathode, l'anode, la grille et la grille d'arrêt, et pouvant supporter une pression interne inférieure à la pression atmosphérique.

6. Appareil de l'une quelconque des revendications précédentes dans lequel le circuit est en outre adapté pour pouvoir recevoir des signaux pour déterminer une densité de puissance relative de l'appareil et pour faire varier dynamiquement au moins un des potentiels électriques d'anode, de grille et de grille d'arrêt en réponse à la densité de puissance relative déterminée.

7. Appareil de la revendication 5 comprenant en outre : une pompe fonctionnellement reliée au boîtier pour changer la pression interne.

8. Appareil de l'une quelconque des revendications précédentes dans lequel la cathode et l'anode sont séparées par une distance qui fait 10-1000 nm, par exemple dans lequel la cathode et la grille sont séparées par une distance qui fait 1-100 nm, par exemple dans lequel l'anode et la grille d'arrêt sont séparées par une distance qui fait 1-100 nm.

9. Appareil de l'une quelconque des revendications précédentes dans lequel la cathode comporte au moins un élément amplifiant l'émission de champ.

10. Procédé de fonctionnement d'un appareil (100) configuré comme une machine thermique comprenant :

l'application d'un potentiel électrique de grille (204) pour libérer sélectivement un premier ensemble d'électrons (206) d'un état lié dans une première région, la première région correspondant à une cathode (102) ; l'application d'un potentiel électrique de grille d'arrêt (210) pour libérer sélectivement un deuxième ensemble d'électrons d'une émission d'un état lié dans une deuxième région différente de la première région, la deuxième région correspondant à une anode (108), la deuxième région ayant un potentiel électrique d'anode qui est supérieur à un potentiel électrique de cathode de la première région ; le passage d'une partie du premier ensemble d'électrons par une région remplie de gaz et la liaison de la partie passée du premier ensemble d'électrons dans la deuxième région ; la détermination d'un rendement thermodynamique relatif ; et la variation d'au moins un des potentiels électriques de grille et de grille d'arrêt en réponse au rendement thermodynamique relatif déterminé.

11. Procédé de la revendication 10 dans lequel la partie passée, liée du premier ensemble électrons dans la deuxième région forme un courant, et comprenant en outre au moins une des étapes suivantes :

la mesure d'une propriété du courant et la variation d'au moins un potentiel parmi le potentiel électrique de grille, le potentiel électrique de grille d'arrêt et le potentiel électrique d'anode en fonction de la propriété mesurée du courant ; l'alimentation d'un dispositif avec le courant.

**12.** Procédé de l'une quelconque des revendications 10 ou 11 comprenant en outre :

la mesure d'une température de la première ou deuxième région ; et
la variation d'au moins un potentiel parmi le potentiel électrique de grille, le potentiel électrique de grille d'arrêt et le potentiel électrique d'anode en fonction de la température mesurée de la première ou deuxième région.

**13.** Procédé de la revendication 10 dans lequel la détermination d'un rendement thermodynamique relatif comporte :
la mesure d'au moins un paramètre parmi un courant dans la deuxième région, une température dans la deuxième région, et une température dans la première région.

**14.** Procédé de la revendication 10 comprenant en outre une des étapes suivantes :

le chauffage de la première région et la variation du potentiel électrique de grille en fonction d'un changement de température de la première région ;
le refroidissement de la deuxième région et la variation du potentiel électrique de grille en fonction d'un changement de température de la deuxième région ;
la variation d'au moins un potentiel parmi le potentiel électrique de grille, le potentiel électrique de grille d'arrêt et le potentiel électrique d'anode en fonction du temps ;
l'accélération du premier ensemble d'électrons avec les potentiels électriques de grille et de grille d'arrêt dans une première direction ;
l'application du potentiel de grille d'arrêt pour faire passer au moins une partie du premier ensemble d'électrons tout en bloquant sélectivement le deuxième ensemble d'électrons ;
le passage d'une partie du deuxième ensemble d'électrons par une région remplie de gaz et la liaison de la partie passée du deuxième ensemble d'électrons dans la première région.

FIG. 1

FIG. 2

FIG. 3

FIG. 4

EP 2 798 673 B1

```
                              ┌─────────┐
                              │  Start  │
                              └────┬────┘
                                   │
                                   ▼
┌───────────────────────────────────────────────────────────────────────┐
│                                                                         │  502
│  applying a gate electric potential to selectively release a first set  │
│  of electrons from a bound state in a                                   │
│                          first region                                   │
└───────────────────────────────────┬─────────────────────────────────────┘
                                     │
                                     ▼
┌───────────────────────────────────────────────────────────────────────┐
│                                                                         │  504
│  applying a suppressor electric potential to selectively release a      │
│  second set of electrons from                                           │
│  emission from a bound state in a second region different from the       │
│  first region, the second region                                        │
│  having an anode electric potential that is greater than a cathode       │
│  electric potential of the first region                                 │
└───────────────────────────────────┬─────────────────────────────────────┘
                                     │
                                     ▼
┌───────────────────────────────────────────────────────────────────────┐
│                                                                         │  506
│      binding the passed portion of the first set of electrons in the    │
│                            second region                                │
└───────────────────────────────────┬─────────────────────────────────────┘
                                     │
                                     ▼
                              ┌─────────┐
                              │   End   │
                              └─────────┘
```

**FIG. 5**

Start

receiving a first signal corresponding to a heat engine, the heat engine including an anode, cathode, gas-filled region, gate and suppressor    602

processing the first signal to determine a first power output and/or relative thermodynamic efficiency of the heat engine as a function of an anode electric potential, a gate electric potential, and a suppressor electric potential    604

producing a second signal based on a second power output and/or thermodynamic efficiency greater than the first power output and/or thermodynamic efficiency    606

transmitting the second signal corresponding to the second power output and/or thermodynamic efficiency    608

End

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009115305 A
- JP 2005116736 B
- US 3254244 A